# EUROPÄISCHE PATENTANMELDUNG

(11) **EP 1 355 455 A1**
(43) Veröffentlichungstag der Anmeldung: **22.10.2003**
(21) Anmeldenummer: 02008481.0
(22) Anmeldetag: 15.04.2002
(51) Int. Cl.: H04L 12/58

(54) **Verfahren zur Nachrichtenverteilung**

(71) Anmelder: SIEMENS AKTIENGESELLSCHAFT, 80333 München (DE)
(72) Erfinder: Doerr, Franz, 3493 Hadersdorf (AT); Tinnacher, Michael, 1220 Wien (AT); Wendy, Leopold, 2224 Obersulz (AT); Zöchling, Kirsti, 1220 Wien (AT)
(74) Vertreter: Berg, Peter, Dipl.-Ing.

(57) **Zusammenfassung**

Die Erfindung betrifft ein Verfahren zur Nachrichtenübermittlung in Kommunikationsnetzen mit folgenden Verfahrensschritten:
die zu übermittelnde Nachricht und ein Verteilerkreis werden in Textform an eine auf einem Server eines Computernetzwerkes (INTERNET) eingerichtete Anwendung (APP)gesandt,
die Anwendung (APP) ermittelt durch Abfrage einer entsprechend vorbereiteten Datenbank (DAT) die diesem Verteilerkreis zugeordneten Teilnehmer und die jedem Teilnehmer zugeordnete Nachrichtenmittel (FAX, EMAIL, SMS) und die Nachrichtenadresse
an jede Nachrichtenadresse wird die zu übermittelnde Nachricht in der Form übermittelt, die durch die jeweils zugeordnete Nachrichtenmittel (FAX,EMAIL,SMS)vorgegeben ist.

## Beschreibung

Die Erfindung betrifft ein Verfahren zur Nachrichtenübermittlung in Kommunikationsnetzen .

Im Zeitalter der Telekommunikation wird der Anwender mit einer Vielzahl von Informationsmöglichkeiten konfrontiert. Diese umfassen beispielsweise die Telefonie , Fernkopierverfahren (FAX), Short Message Service (SMS) und Electronic Mail (Email).

Jede der genannten Informationsmöglichkeiten hat ihre spezifischen Eigenschaften, Vor- und Nachteile und ist an bestimmte Geräte gebunden.

So kann die Telefonie über herkömmliches Zeitmultiplex - Festnetz, mittels Mobilfunk wie GSM oder aber auch über Computernetzwerke mit dem Internet-Protokoll (Voice-over-IP) und die daran angeschlossenen Endgeräte erfolgen, Fernkopien erfordern entweder spezielle Geräte oder entsprechend ausgerüstete Personalcomputer und Short Message Service ist üblicherweise nur mit Mobilfunkendgeräten möglich.

Aufgrund der unterschiedlichen Eigenschaften dieser Kommunikationsmöglichkeiten eignen sie sich auch für unterschiedliche Aufgabengebiete.

Die Telefonie mit der Möglichkeit zum sprachgebundenen Dialog ist vorteilhaft dort einsetzbar, wo es aufgrund der Komplexität des Sachverhaltes darauf ankommt, interaktiv im Dialog einen Sachverhalt zu klären. Der Nachteil der Telefonie liegt sicherlich darin, daß die Teilnehmer am Informationsaustausch gleichzeitig verfügbar sein müssen. Dies ist bei einer Gruppe von Teilnehmern oftmals ein unüberwindbares Hindernis. Entschärft wird dieser Nachteil durch Anrufbeantworter oder, bei modernen Telefonnetzen durch die sogenannte Sprachbox, d.h. Sprachspeichermöglichkeiten im Netz.

Bei Fernkopierverfahren (FAX), Short Message Service (SMS) und Electronic Mail (Email) ist die gleichzeitige Verfügbarkeit der Teilnehmer nicht notwendig, diese Verfahren sind allerdings durch die im Vergleich zur Telefonie eingeschränkte, da schriftliche Dialogfähigkeit und den damit verbundenen Zeitverlust für zeitkritische Anwendungen, wie beispielsweise bei der Verständigung von Einsatzkräften wie Feuerwehr, Rettungeinheiten und Polizeikräften nur bedingt einsetzbar. So ist bei Verwendung der Fernkopierverfahren erst nach Erhalt einer entsprechenden Antwort gewährleistet, daß der Empfänger die Nachricht ordnungsgemäß erhalten und verstanden hat. Dies gilt auch für Electronic Mail, wobei hier aufgrund der Eigenschaften der paketvermittelten Datenübertragung über Computernetzwerke die Möglichkeit besteht, daß die Nachricht vergleichsweise lange benötigt, um den Empfänger zu erreichen. Bei Verwendung der Short Message Services (SMS) sind wiederum durch die stark begrenzte Nachrichtenlänge von maximal 160 Zeichen im GSM Netz die Informationsmöglichkeiten begrenzt. Auch hier besteht überdies die Möglichkeit, daß insbesondere in Zeiten starker Netzbelastung die Übetragung eines SMS mehrere Stunden in Anspruch nimmt.

Der Erfindung liegt daher die Aufgabe zugrunde, eine Möglichkeit zur automatisierten Information einer Gruppe von Personen über personenspezifisch ausgewählte Dienste anzugeben.

Erfindungsgemäß geschieht dies mit einem Verfahren zur Nachrichtenübermittlung in Kommunikationsnetzen mit folgenden Verfahrensschritten:
- die zu übermittelnde Nachricht und ein Verteilerkreis werden in Textform an eine auf einem Server eines Computernetzwerkes eingerichtete Anwendung gesandt,
- die Anwendung ermittelt durch Abfrage einer entsprechend vorbereiteten Datenbank die diesem Verteilerkreis zugeordneten Teilnehmer und die jedem Teilnehmer zugeordneten Nachrichtenmittel und die Nachrichtenadresse
- an jede Nachrichtenadresse wird die zu übermittelnde Nachricht in der Form gesandt, die durch die jeweils zugeordneten Nachrichtenmittel vorgegeben ist. Damit ist es möglich, alle zu verständigenden Personen in der für sie aufgrund der individuellen Situation zweckmäßigsten und erfolgversprechendsten Weise zu informieren.

Häufig verwendete Nachrichtenmittel sind Telefonie , Fernkopierverfahren (FAX), Short Message Service (SMS) und Electronic Mail (Email. Diese Dienste sind weit verbreitet und daher für einen umfangreichen Personenkreis anwendbar.

Günstig ist es, wenn als Computernetz das Internet vorgesehen ist und die auf einem Server eines Computernetzwerkes eingerichtete Anwendung mittels Internet-Navigationsprogramm ansteuerbar ist. Das Internet als größtes globales Computernetz ist vielen Personen bekannt und die Handhabung der sogenannten Browser (Internet-Navigationsprogramme) vertraut, andererseits ist es aufgrund seiner dezentralen Struktur besonders ausfallsicher und daher besonders zur Alarmierung von Einsatzkräften in Krisen- und Notsituationen besonders geeignet.

Vorteilhaft ist es weiterhin, wenn Mittel zur Spracherkennung in der Weise vorgesehen werden, daß die zu übermittelnde Nachricht und ein Verteilerkreis als gesprochene Befehle eingegeben und danach in Textform umgewandelt werden und wenn Mittel zur Sprachausgabe in der Weise vorgesehen werden, daß die Nachricht in Textform bei ausgewählten Nachrichtenmitteln in Sprache umgewandelt und als Sprachnachricht übermittelt wird.

Vorteilhaft ist es weiterhin, wenn jedem Teilnehmer mehrere Nachrichtenmittel und Nachrichtenadressen zugeordnet werden und wenn die Nachricht in Abhängigkeit von Datum und/oder Uhrzeit in bevorzugten Nachrichtenmittel an eine oder mehreren Nachrichtenadressen gesendet wird. Damit ist es möglich, die Erreichbarkeit der Teilnehmer in Abhängigkeit von der Tageszeit oder des Kalenders optimiert zu erreichen. So kann in der Freizeit am Wochenende oder am Abend als Nachrichtenmittel beispielsweise ein Mobiltelefon verwendet werden während unter der Woche untertags während der Arbeitszeit des betreffenden Teilnehmers Email oder Telekopie benutzt wird. Auch die Verwendung mehrerer Nachrichtenmittel parallel ist möglich. Dies erhöht die Wahrscheinlichkeit, daß der Empfänger eine dringende Nachricht auch sofort erhält.

Die Erfindung wird anhand einer Figur näher erläutert, welche beispielhaft den Einsatz der Erfindung zeigt.

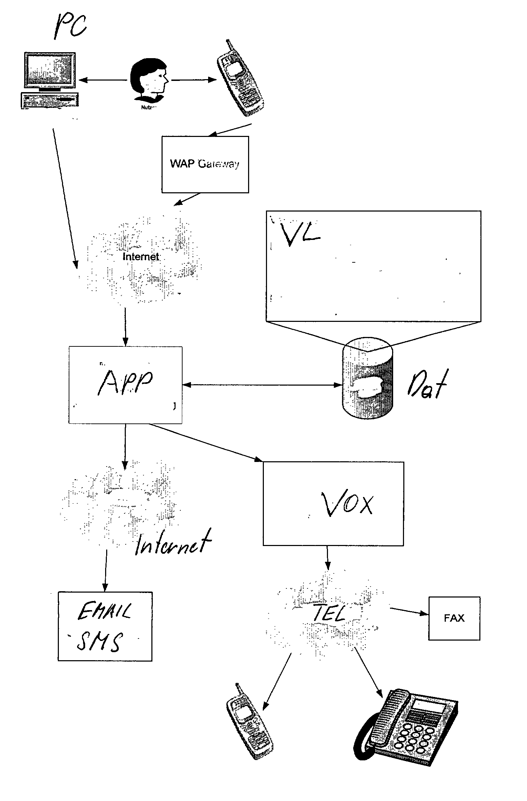

Die Figur zeigt schematisch ein Computernetzwerk INTERNET,die auf einem Server dieses Computernetzwerkes eingerichtete Anwendung APP, eine Datenbank DAT, als Teilnehmer am Computernetzwerk einen Personalcomputer mit Internet-Navigationsprogramm PC, ein Mobiltelefon mit WAP-Funktionalität, ein Voice Portal VOX zur Ansage von Nachrichten im Zeitmultiplex - Festnetz TEL, sowie Endgeräte dieses Zeitmultiplex - Festnetzes TEL wie Telefon Fernkopierer FAX und Schnurlos-Telefon.

In der Datenbank werden Verteillisten gespeichert die etwa wie folgt aussehen können:

| Verteiler 1: Feuerwehr | | |
|---|---|---|
| Kommandant | SMS | 0676-5660027 |
| Fahrer | Telefon | 01-4051716 |
| Fritz | Email | fritz.maier@siemens.com |
| .... | .... | .... |
| .... | .... | .... |

| Verteiler 2:Firma | | |
|---|---|---|
| Boss | Email | ober.boss@company.com |
| Werner | Telefon | 01 123456 |
| .... | .... | .... |
| .... | .... | .... |

Diese Verteillisten können durch entsprechend befugte Personen über Personalcomputer mit Internet-Navigationsprogramm PC eingesehen und editiert werden. Sie können auch differenzierter gestaltet werden, so beispielsweise in der Art, daß die Verteiler mit entsprechenden Programmen Uhrzeit und Datumsabhängig gestaltet werden. Alternativ dazu sind auch Eingaben über andere internetfähige Endgeräte wie Mobiltelefone mit WAP (Wide Area Paging) Funktionalität möglich.

Auf der Grundlage dieser Verteillisten übermittelt dann die Anwendung APP die Nachrichten an die jeweiligen Personen bzw Endgeräte. Bei Ausgabe durch ein herkömmliches Telefon ohne Textdarstellungsmöglichkeiten ist der Einsatz eines Sprachsynthesemittels vorgesehen, welches den Text in Sprache umwandelt.

Umgekehrt ist es außerdem möglich, Sprache in Text umzuwandeln und diesen dann als Nachricht zu versenden. Dazu wäre es auch denkbar, daß die Auslösung der versendung eines vorgegebenen Nachrichtentextes mittels Anruf bei einem Callcenter und Eingabe eines Paßwortes ausgelöst wird.

Mit Ausnahme der auf einem Server dieses Computernetzwerkes eingerichteten Anwendung APP handelt es sich bei allen Bestandteilen um übliche und vorhandene Komponenten der entsprechenden Netzwerke.

Auch die verschiedenen Methoden der Nachrichtenübermittlung sind aus dem Stand der Technik bekannt.

## Patentansprüche

1. Verfahren zur Nachrichtenübermittlung in Kommunikationsnetzen mit folgenden Verfahrensschritten:
- die zu übermittelnde Nachricht und ein Verteilerkreis werden in Textform an eine auf einem Server eines Computernetzwerkes (INTERNET) eingerichtete Anwendung (APP) gesandt,
- die Anwendung (APP)ermittelt durch Abfrage einer entsprechend vorbereiteten Datenbank (DAT) die diesem Verteilerkreis zugeordneten Teilnehmer und die jedem Teilnehmer zugeordneten Nachrichtenmittel (FAX,EMAIL,SMS) und die Nachrichtenadresse
- an jede Nachrichtenadresse wird die Nachricht in der Form gesendet, die durch die jeweils zugeordneten Nachrichtenmittel vorgegeben ist.

2. Verfahren nach Anspruch 1, **dadurch gekennzeichnet, daß** als mögliche Nachrichtenmittel Telefonie , Fernkopierverfahren (FAX), Short Message Service (SMS) und Electronic Mail (Email) vorgesehen sind.

3. Verfahren nach einem der Ansprüche 1 oder 2, **dadurch gekennzeichnet, daß** als Computernetz (INTERNET)das Internet vorgesehen ist und die auf einem Server eines Computernetzwerkes eingerichtete Anwendung (APP) mittels Internet-Navigationsprogramm ansteuerbar ist.

4. Verfahren nach einem der Ansprüche 1 bis 3, **dadurch gekennzeichnet, daß** Mittel zur Spracherkennung in der Weise vorgesehen werden, daß die zu übermittelnde Nachricht und ein Verteilerkreis als gesprochene Befehle eingegeben und danach in Textform umgewandelt werden und daß weiterhin Mittel zur Sprachausgabe in der Weise vorgesehen werden, daß die Nachricht in Textform bei ausgewählten Nachrichtenmittel in Sprache umgewandelt und als Sprachnachricht übermittelt wird.

5. Verfahren nach einem der Ansprüche 1 bis 4, **dadurch gekennzeichnet, daß** jedem Teilnehmer mehrere Nachrichtenmittel und Nachrichtenadresse zugeordnet werden und daß die Nachricht in Abhängigkeit von Datum und/oder Uhrzeit in bevorzugten Nachrichtenmittel an eine oder mehrere Nachrichtenadressen gesendet wird.
